# EUROPÄISCHE PATENTANMELDUNG

(11) **EP 1 531 281 A2**
(43) Veröffentlichungstag der Anmeldung: **18.05.2005**
(21) Anmeldenummer: 04024839.5
(22) Anmeldetag: 19.10.2004
(51) Int. Cl.: F16F 7/09, E05F 1/10

(54) **Verstellvorrichtung, insbesondere für ein an einem weiteren Bauteil bewegbar angeordneten Bauteil**

(30) Priorität: 13.11.2003 DE 20317591 U; 15.01.2004 DE 202004000604 U
(71) Anmelder: REUM GmbH & Co. Betriebs KG, 74736 Hardheim (DE)
(72) Erfinder: Gayer, Markus, 97980 Bad Mergentheim (DE)
(74) Vertreter: Maser, Jochen, Dipl.-Ing.

(57) **Zusammenfassung**

Die Erfindung betrifft eine Verstelleinrichtung, insbesondere für ein an einem weiteren Bauteil bewegbar angeordneten Bauteil, mit einem Gehäuse (12), welches zumindest ein Befestigungselement (14) aufweist, mit einem axial in dem Gehäuse (12) bewegbar angeordneten Stellelement (17), welches ein Kolben (21) und eine daran angeordnete Kolbenstange (22) umfasst, deren freies Ende zumindest ein Befestigungselement (23) aufweist, mit einer Kraftspeichereinrichtung (36), wobei zumindest eine an dem Gehäuse (12) oder dem zumindest einen Kolben (21) integrierte oder daran angeordnete Dämpfungseinrichtung (31) vorgesehen ist, welche mit der Kraftspeichereinrichtung (36) zusammenwirkt und die auf das bewegbare Stellelement (17) wirkende Verstellkraft zwischen einer Ruhestellung (43) und einer Arbeitsstellung (44) ausübt.

## Beschreibung

Die Erfindung betrifft eine Verstellvorrichtung, insbesondere für ein an einem weiteren Bauteil bewegbar angeordneten Bauteil, mit einem Gehäuse, welches zumindest eine Kraftspeicherelement aufweist und mit einem axial in dem Gehäuse bewegbar angeordneten Stellelement, welches an diesem Gehäuse bewegbaren Kolben und eine daran vorgesehene Kolbenstange umfasst, an deren freien Ende zumindest ein Befestigungselement vorgesehen ist und mit einer in dem Gehäuse vorgesehenen Kraftspeichereinrichtung.

Zum Öffnen und Schließen beweglicher Teile, die an einem weiteren Teil zumeist schwenkbar angeordnet sind, werden insbesondere in der Automobilindustrie Gasdruckdämpfer eingesetzt. Durch diese Gasdruckdämpfer ist ermöglicht, dass beispielsweise eine Klappe an einer Mittelarmlehne in einer geöffneten Position durch den Gasdruckdämpfer gehalten wird. Durch den Einsatz des Gasdruckdämpfers kann eine gedämpfte Öffnungs- und Schließbewegung erfolgen, so dass vor Erreichen einer Endposition im geöffneten Zustand die Öffnungsbewegung der Klappe gedämpft wird.

Derartige Gasdruckdämpfer sind als Kaufteil auf dem Markt bekannt und ermöglichen eine gleichmäßige und insbesondere gedämpfte Bewegung. Diese Gasdruckdämpfer weisen jedoch den Nachteil auf, dass sie ein hohes Eigengewicht aufweisen, in der Anschaffung sehr kostenintensiv sind und darüber hinaus ein hoher Anpassungsaufwand für die zu bewegenden Bauteilkomponenten und für den Einbauraum erfordern, wodurch die Konstruktionskosten und auch die Herstellungskosten der zu bewegenden Bauteile erhöht wird.

Der Erfindung liegt deshalb die Aufgabe zugrunde, einen Ersatz für einen derartigen Gasdämpfer zu schaffen, der in der Herstellung kostengünstig und auf verschiedene Einbausituationen einfach anpassungsfähig ist.

Diese Aufgabe wird erfindungsgemäß durch eine Verstelleinrichtung gemäß den Merkmalen des Anspruchs 1 gelöst.

Die erfindungsgemäße Verstellvorrichtung, welche eine Dämpfungseinrichtung umfasst, die mit der Kraftspeichereinrichtung zusammenwirkt und an dem Gehäuse oder dem Kolben integriert oder daran angeordnet ist, ermöglicht eine konstruktiv einfache Ausgestaltung, welche wiederum eine leichte Anpassung an unterschiedliche Einbausituationen ermöglicht. Die Verstelleinrichtung ist aufgrund der geringen Anzahl der Baukomponenten kostengünstig herstellbar. Beispielsweise kann in einer ersten erfindungsgemäßen Ausführungsform die Dämpfungseinrichtung in dem Gehäuse oder dem Kolben oder den beiden Teilen integriert sein, so dass sich die Verstelleinrichtung aus den Komponenten Gehäuse, Stellelement und Kraftspeichereinrichtung zusammensetzt. Auch die weitere erfindungsgemäße Verstelleinrichtung, bei der die Dämpfungseinrichtung einem Gehäuse oder zumindest einem Kolben zugeordnet ist, weist einen kostengünstigen Aufbau auf, bei dem lediglich vier Bauteilkomponenten zur Bildung einer Verstelleinrichtung erforderlich sind.

Nach einer vorteilhaften Ausgestaltung der Erfindung ist vorgesehen, dass wenigstens zwei zueinander beabstandete, an der Gehäuseinnenwand gleitend angeordnete, ringförmige Führungsabschnitte vorgesehen sind. Dadurch wird eine verkippungsfreie Aufnahme des Stellelementes in dem Gehäuse ermöglicht, so dass eine sichere Stellbewegung des Kolbens in dem Gehäuse gegeben ist.

Eine erste Ausführungsform dieser vorteilhaften Ausgestaltung sieht vor, dass die Führungsabschnitte an einem Kolben des Stellelementes vorgesehen sind, welche an einer Gehäuseinnenwand gleitend angeordnet sind. Nach einer weiteren Alternative der vorteilhaften Ausgestaltung ist vorgesehen, dass die Führungsabschnitte durch beispielsweise zwei im Durchmesser unterschiedliche Kolben oder Kolbenabschnitte des Stellelementes gebildet werden, wobei die Gehäuseinnenwandabschnitte an die Durchmesser der Kolben oder Kolbenabschnitte entsprechend angepasst sind.

Die Führungsabschnitte sind vorteilhafterweise durch zwei einander zugeordneten scheibenförmige Elemente ausgebildet, deren radialer Außenwandabschnitt am Gehäuse angreift. Dadurch wird ermöglicht, dass die Führungsabschnitte selbst eine geringe Reibung und somit einen geringen Verschleiß aufweisen, um die Stellkraft bei einer Öffnungs- und/oder Schließbewegung zu übertragen.

Gleichzeitig kann durch die Ausgestaltung der Führungsabschnitte in Form von wenigstens zwei zueinander beabstandeten scheibenförmigen Elementen erzielt werden, dass eine große an der Gehäuseinnenwand angreifende Wirkfläche erzielt wird, wohingegen die tatsächliche Reibfläche gering gehalten ist. Dadurch wird die Qualität der Führung erhöht.

Nach einer weiteren vorteilhaften Ausgestaltung der Erfindung ist vorgesehen, dass zwischen den Führungsabschnitten eine Dämpfungseinrichtung angeordnet ist, welche als Reibring ausgebildet ist. Somit können die Führungsabschnitte gleichzeitig neben der Führung des Kolbens in dem Gehäuse auch die Führung einer Dämpfungseinrichtung übernehmen. Dadurch ist eine sichere und einfache Ausgestaltung einer Aufnahme für eine Dämpfungseinrichtung gegeben. Vorteilhafterweise weist der Reibungsring eine radial umlaufende Außenfläche auf. Alternativ kann vorgesehen sein, dass die an der Gehäusewand angreifende Reibfläche radial umlaufende und/oder axial verlaufende Vertiefungen aufweist, so dass die Ringfläche abschnittsweise an der Gehäusewand angreift.

Eine alternative Ausgestaltung der Erfindung umfasst eine Dämpfungseinrichtung, welche hülsenförmig ausgebildet ist und in dem Gehäuse eingesetzt oder eingepresst ist. Dadurch ist eine einfache Herstellung für eine Dämpfungseinrichtung gegeben. Gleichfalls kann bei Abnützung der Dämpfungseinrichtung in Analogie zum Reibring ein einfacher Austausch ermöglicht sein.

Nach einer alternativen Ausgestaltung der Erfindung ist vorgesehen, dass benachbart zu den Führungsabschnitten zumindest eine Dämpfungseinrichtung angeordnet ist. Beispielsweise kann auf einem Kolbenabschnitt, der ebenfalls wie ein Kolben an einer Gehäuseinnenwand geführt ist, eine Dämpfungseinrichtung vorgesehen sein, welche in einem zur Kraftspeichereinrichtung separat vorgesehenen Arbeitsraum positioniert ist. Dadurch ist zumindest ein Führungsabschnitt im Gehäuse der Verstelleinrichtung getrennt zum Arbeitsraum der Dämpfungseinrichtung vorgesehen.

Das Stellelement weist nach einer vorteilhaften Ausgestaltung an einer der Kolbenstange entgegengesetzten Stirnseite eine Führung auf, welche vorzugsweise ein Führungselement umfasst, das verschiebbar zu einem komplementären Führungselement in dem Gehäuse angeordnet ist. Beispielsweise kann an dem Kolben ein Führungsbolzen vorgesehen sein, der in einer Hülse, die am Gehäuse befestigt ist, eintaucht und als zusätzliches Element zur Aufnahme von Kippmomenten dient. Das Führungselement kann ebenso als Hülse ausgebildet sein, welche einen an dem Gehäuse angeordneten Führungsbolzen umgreift. Des Weiteren kann alternativ vorgesehen sein, dass das an dem Kolben angeordnete Führungselement hülsenförmig ausgebildet ist und an dessen freien äußeren Ende zusätzliche Führungsabschnitte umfasst, die an der Gehäuseinnenwand angreifen.

Nach einer weiteren vorteilhaften Ausgestaltung der Erfindung ist vorgesehen, dass die Kraftspeichereinrichtung als elastisch verformbares Element ausgebildet ist. Dies kann beispielsweise in Form von elastisch ausgebildeten stabförmig oder ringförmig bzw. scheibenförmig Kunststoffelement ausgebildet sein. Ebenso können elastische Kunststoffschaumelemente eingesetzt werden. Alternativ hierzu können metallische Druck- oder Spiralfedern eingesetzt werden.

Das Gehäuse und das Stellelement der Verstelleinrichtung sind bevorzugt jeweils einteilig ausgebildet, wodurch der Herstellungsaufwand und der Handhabungsaufwand zur Montage minimiert ist.

Das Gehäuse und das Stellelement sind vorteilhafterweise aus dem selben Material hergestellt. Beispielsweise können das Gehäuse und das Stellelement als Kunststoffspritzgussteil hergestellt sein. Durch die Verwendung von gleichem Material, wie beispielsweise thermoplastischen Kunststoffmaterialien, insbesondere PU, PP oder glasfaserverstärkte Kunststoffe, kann eine kostengünstige Herstellung erfolgen. Vorteilhafterweise können in einem Werkzeug sowohl das Gehäuse als auch das Stellelement als Ein- oder Mehrkomponenten-Spritzgussteil oder Druckgussteil hergestellt werden.

Alternativ kann vorgesehen sein, dass das Gehäuse und das Stellelement als Automatendrehteil ausgebildet sind, wodurch eine günstige Massenproduktion der Teile ermöglicht ist.

Nach einer weiteren vorteilhaften Ausgestaltung der Erfindung ist vorgesehen, dass die Kraftspeichereinrichtung und die zumindest eine Dämpfungseinrichtung aufeinander abgestimmt sind, so dass in einer ersten Stellbewegungsphase eine hohe Verfahrgeschwindigkeit erzielt wird und in einer Endphase eine zunehmende Verzögerung erfolgt. Dadurch kann ein hartes Überführen des bewegten Bauteils in eine Endlage vermieden werden, jedoch gleichzeitig ein schnelles Öffnen ermöglicht sein. Die Kraftspeichereinrichtung dient als Stellelement mit hoher Bewegungsenergie, wobei die Dämpfungseinrichtung als Reibelement ausgebildet ist, welches die Stellenergie vernichtet. In Abhängigkeit des Stellweges und der erforderlichen Stellgeschwindigkeiten werden die einzelnen Parameter für die Dämpfungseinrichtung und Kraftspeichereinrichtung ausgewählt.

Weitere vorteilhafte Ausführungen und Weiterbildungen der Erfindung sind in weiteren Ansprüchen angegeben.

Die Erfindung sowie weitere vorteilhafte Ausführungsformen und Weiterbildungen derselben werden im Folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: eine schematische Schnittdarstellung einer erfindungsgemäßen Verstelleinrichtung in einer Ruhestellung,
- Figur 2: eine schematische Schnittdarstellung der erfindungsgemäßen Verstelleinrichtung in einer Arbeitsstellung,
- Figur 3: eine schematische Schnittdarstellung einer alternativen Ausführungsform zur Verstelleinrichtung gemäß Figur 1 in einer Ruhestellung,
- Figur 4: eine schematische Schnittdarstellung einer weiteren alternativen Ausführungsform einer Verstelleinrichtung gemäß Figur 1 und
- Figur 5: eine schematische Schnittdarstellung einer weiteren alternativen Ausführungsform einer Verstelleinrichtung gemäß Figur 1.

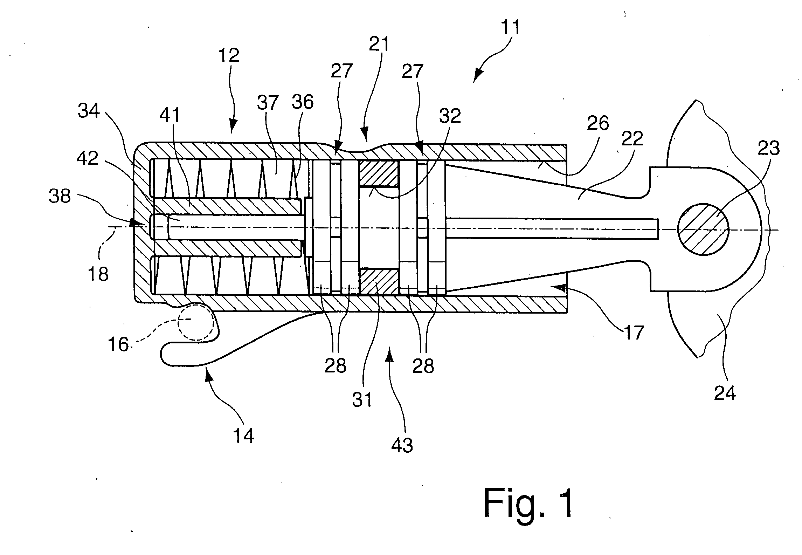

Figur 1 zeigt eine schematische Schnittdarstellung einer erfindungsgemäßen Verstelleinrichtung 11. Diese Verstelleinrichtung 11 umfasst ein Gehäuse 12 mit zumindest einem daran angeordneten Befestigungselement 14, welche zur Verbindung mit einem Bauteil 16 vorgesehen ist, welches in Figur 1 nur ansatzweise dargestellt ist. Das Befestigungselement 14 kann gemäß Figur 1 als U-förmige Aufnahme ausgebildet sein oder als laschen- oder ringförmige Aufnahme sowie als Steckelement mit einer Rast- und/oder Schnappverbindung. Das Befestigungselement 14 kann in seiner Form an das Bauteil 16 angepasst sein, an welchem die Verstelleinrichtung 11 angreift.

In dem Gehäuse 12 ist ein Stellelement 17 axial bewegbar entlang einer Längsachse 18 des Gehäuses 12 aufgenommen. Das Stellelement 17 umfasst einen Kolben 21, an dem eine Kolbenstange 22 mit einem Befestigungselement 23 vorgesehen ist. Dieses Befestigungselement 23 ist wiederum an das weitere Bauteil 24 anpasst, welches ebenfalls nur ansatzweise schematisch dargestellt ist.

Das Gehäuse 12 ist im Querschnitt gesehen U-förmig ausgebildet und weist eine Gehäuseinnenwand 26 auf, an welcher Führungsabschnitte 27 des Kolbens 21 gleitend angreifen. Die Führungsabschnitte 27 des Kolbens 21 umfassen paarweise ausgebildete scheibenförmige Elemente 28, die vorteilhafterweise zueinander geringfügig beabstandet sind. Durch diese Ausgestaltung ist ermöglicht, dass eine verkippungsfreie Anordnung und eine gute Führung des Kolbens 21 in der Gehäuseinnenwand 26 ermöglicht ist.

Zwischen den Führungsabschnitten 27 ist eine Dämpfungseinrichtung 31 vorgesehen, welche gemäß diesem Ausführungsbeispiel als Reibring ausgebildet ist. Dieser Reibring ist in einer U-förmigen Vertiefung 32 am Kolben 21 angeordnet und wird während der Stellbewegung durch die Führungsabschnitte 27 geführt und gestützt. Die Dämpfungseinrichtung 31 ist beispielsweise auch als Gummiringelement ausgebildet. Alternativ kann vorgesehen sein, dass die Dämpfungseinrichtung 31 aus zwei oder mehreren Komponenten besteht, die beispielsweise Schichtweise übereinander angeordnet sind, sowohl in radialer als auch in axialer Richtung gesehen. Die aus mehrere Komponenten bestehende Dämpfungseinrichtung 31 kann beispielsweise auch unterschiedliche Materialhärten oder Reibwerte der Materialien umfassen, die miteinander kombiniert sind, so dass beispielsweise zwischen zwei harten oder weichen Ringelement ein weiches oder ein hartes Ringelement vorgesehen ist.

Zwischen einem Gehäuseboden 34 des Gehäuses 12 und dem Kolben 21 des Stellelementes 17 ist eine Kraftspeichereinrichtung 36 in einem Arbeitsraum 37 angeordnet. Im Ausführungsbeispiel ist das Kraftspeicherelement 36 als Druckfeder ausgebildet. Diese Druckfeder kann aus Metall oder Kunststoff bestehen. Alternativ können weitere Kraftspeicherelemente 36 eingesetzt werden. Insbesondere können Schaumstoffringe oder elastische Kunststoff oder Kunststoffringe oder stabförmige Elemente oder dergleichen eingesetzt und angeordnet sein.

Zwischen dem Gehäuseboden 34 und dem Kolben 21 des Stellelementes 17 ist vorteilhafterweise eine weitere Führung 38 vorgesehen, welche ein Führungselement 41 und ein komplementär dazu ausgebildetes Führungselement 42 umfasst. Beispielsweise ist ein Führungsbolzen 41 an der Stirnseite des Kolbens 21 angeordnet, der in eine Hülse während der Hubbewegung bewegbar geführt ist, die mit dem Gehäuseboden 34 verbunden ist.

Das Stellelement 17 ist in Figur 1 in einer Ruhestellung 43 angeordnet. Beim Einsatz beispielsweise in einer Mittelarmlehne mit einer Klappe ist diese Ruhestellung 43 eingenommen, sobald die Klappe der Mittelarmlehne geschlossen ist.

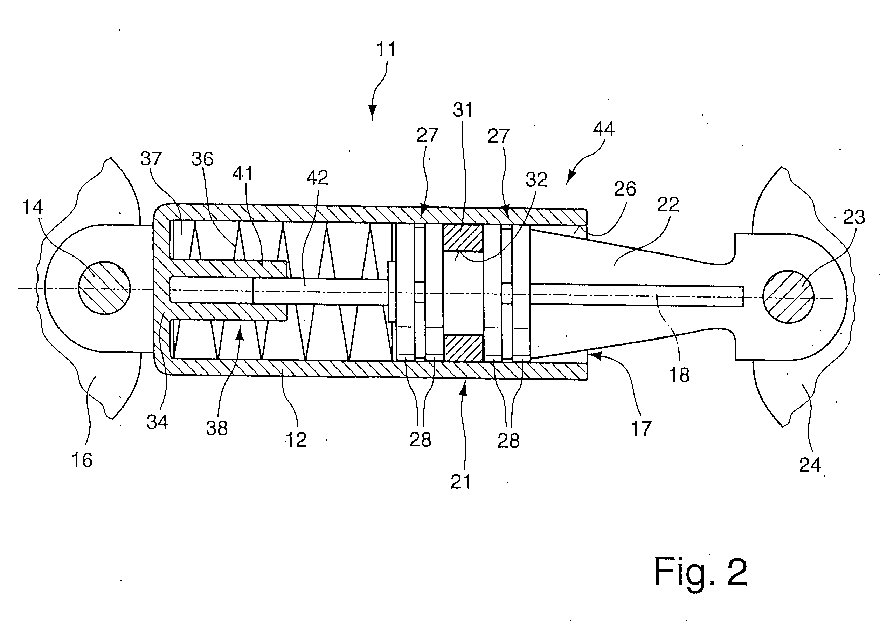

In Figur 2 ist die Verstelleinrichtung 11 in einer Arbeitsstellung 44 angeordnet. In dieser Position ist beispielsweise die Klappe der Mittelarmlehne vollständig geöffnet. Das Stellelement 17 wird aufgrund der Kraftspeichereinrichtung 36 in einer ersten Arbeitsphase mit einer schnellen Hubbewegung beaufschlagt, wobei in einer letzten Stellbewegungsphase die Stellkraft der Kraftspeichereinrichtung 36 abnimmt und die Reibkräfte der Dämpfungseinrichtung 31im Verhältnis zur Kraftspeichereinrichtung 36 mehr und mehr überwiegen, so dass eine gedämpfte Überführung des Bauteils 24 in eine Endlage ermöglicht ist.

Das Gehäuse 12 weist ein offenes Ende 46 auf. Aufgrund des Einsatzes, wonach das Bauteil 24 zumeist einen begrenzten Öffnungsweg umfasst, ist es nicht erforderlich, das Gehäuse 12 zu schließen. Anwendungsspezifisch kann jedoch ein Verschlusselement aufgesetzt und mit dem Gehäuse 12 befestigt werden, so dass das Stellelement nicht aus dem Gehäuseinneren austritt.

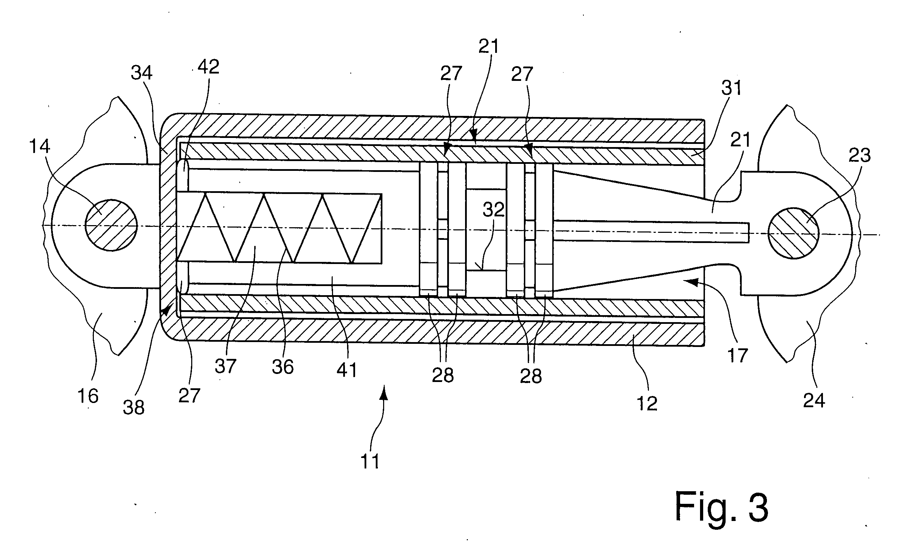

In Figur 3 ist eine alternative Ausführungsform einer erfindungsgemäßen Verstelleinrichtung 11 gemäß Figur 1 dargestellt. Beispielsweise ist die Führung 38 durch ein hülsenförmiges Führungselement 41 ausgebildet, wobei das Führungselement 42 an einer Gehäuseinnenwand 26 angreift. Im vorliegenden Ausführungsbeispiel ist die Gehäuseinnenwand 26 als Dämpfungseinrichtung 31 ausgebildet in Form einer Hülse, die in das Gehäuse 12 eingesetzt ist. Dadurch kann Dämpfungswirkung durch die Vergrößerung der Reibflächen erhöht sein. Bei diesem Ausführungsform greifen beispielsweise die Führungsabschnitte 27 ebenfalls an der Dämpfungseinrichtung 31 an. Alternativ kann auch vorgesehen sein, dass die Dämpfungseinrichtung 31 sich nur im unteren Abschnitt nahe dem Boden 34 erstreckt und im Bewegungsbereich der Führungsabschnitte 27 eine Hülse aus einem Gehäusematerial vorgesehen ist.

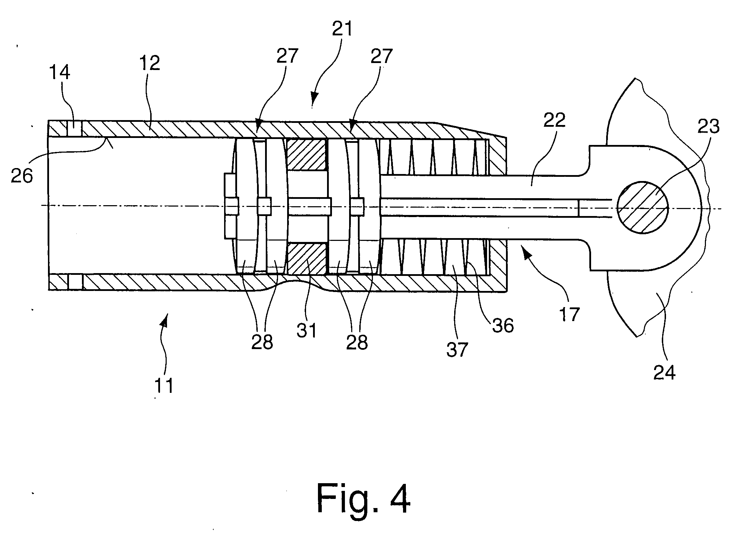

In Figur 4 ist eine weitere alternative Ausführungsform einer Verstelleinrichtung 11 dargestellt. Bei dieser Ausführungsform bewirkt die Kraftspeichereinrichtung 36 eine Verringerung des Abstandes zwischen den beiden Befestigungselementen 14, 23, wohingegen in den Ausführungsbeispielen gemäß den Figuren 1 bis 3 der Abstand zwischen Befestigungselementen 14, 23 vergrößert wurde. Diese alternative Ausführungsform ist in Analogie zu der Figur 1 und 2 aufgebaut, wobei die Kolbenstange 22 im Bereich des Gehäusebodens 34 aus dem Gehäuse 12 austritt.

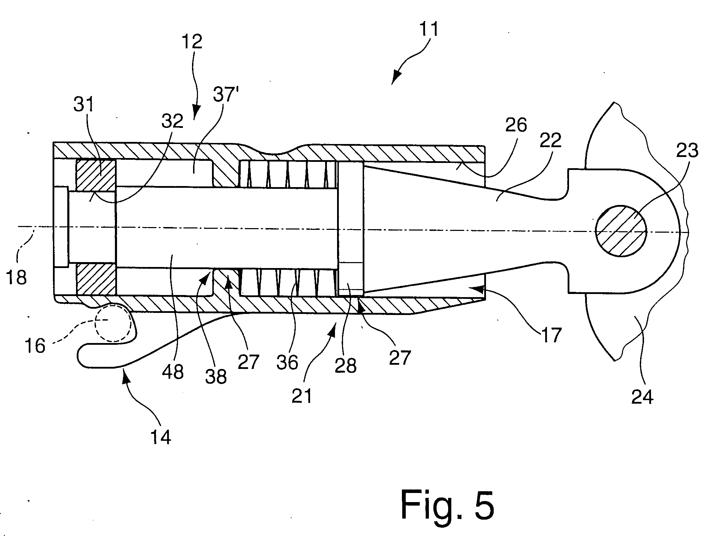

Für Figur 5 ist eine weitere alternative Ausführungsform einer Verstelleinrichtung 11 dargestellt. Bei dieser Ausführungsform weist der Kolben 21 einen Führungsabschnitt 27 auf, der aus einem ringförmigen Element 28 besteht. Zu diesem Führungsabschnitt 27 beabstandet, ist ein weiterer Führungsabschnitt 27 vorgesehen, der durch einen Gehäuseabschnitt und einen an den Kolben 21 abgeordneten weiteren Kolbenabschnitt 48 ausgebildet ist. Zwischen den beiden Führungsabschnitten 27 ist ein Arbeitsraum 37 für eine Kraftspeichereinrichtung 36 vorgesehen. Außerhalb der Führungsabschnitte 27 ist an dem Kolbenabschnitt 48 die zumindest eine Dämpfungseinrichtung 31 vorgesehen, welche beispielsweise durch ein Sicherungselement 49 zum Kolbenabschnitt 48 positioniert und fixiert ist. Die Dämpfungseinrichtung 31 läuft in einem separaten Arbeitsraum 37', so dass eine Trennung der Arbeitsräume 37 und 37' vorgesehen ist. Dadurch können die Gehäuseinnenwandabschnitte unterschiedlich ausgebildet sein, um entsprechende Reibverhältnisse und Dämpfungseigenschaften im Zusammenwirken mit den ringförmigen Elementen 28 oder der Dämpfungseinrichtung 31 zu erzielen. Gleichzeitig kann ermöglicht sein, dass bei einem ggf. erfolgenden Abrieb der Dämpfungseinrichtung 31 die Führungsabschnitte 27 bzw. deren Anlagefläche der Elemente 28 an der Gehäuseinnenwand 26 unbeeinflußt sind.

Die Ausführungsform gemäß Figur 5 weist des Weiteren den Vorteil auf, dass beispielsweise bei vollständigem Eintauchen des Stellelementes 17 in das Gehäuse 12 die zumindest eine Dämpfungseinrichtung 31 aus einem hinteren Gehäuseabschnitt herausgeführt ist, so dass ein einfacher Austausch des Reibringes als Dämpfungseinrichtung 31 ermöglicht ist.

Die Dämpfungseinrichtung 31 ist bevorzugt durch ein Sicherungselement 35 zum Kolbenabschnitt 48 gesichert. Dieses Sicherungselement 35 kann als Sicherungsring, Sicherungssplint, Klemmelement oder dergleichen ausgebildet sein. Dieses Sicherungselement 35 kann zum Austausch der Dämpfungseinrichtung 35 entfernt werden. Der Kolbenabschnitt 48 kann alternativ eine Vertiefung 32 aufweisen, wodurch auch eine sichere Aufnahme der Dämpfungseinrichtung 31 ohne Sicherungselement 35 ermöglicht ist.

Die vorbeschriebenen Ausführungsformen können ebenfalls dahingehend abgeändert werden, dass in dem Arbeitsraum 37 des Kraftspeicherelementes 36 zumindest eine Dämpfungseinrichtung 31 oder umgekehrt angeordnet ist.

Die vorbeschriebenen Ausführungsformen weisen den Vorteil auf, dass Verstelleinrichtungen 11 gegeben sind, welche beispielsweise aus vier unterschiedlichen Bauteilen zusammengesetzt sind, wobei diese Bauteile durch einfaches Ineinandersetzen zueinander positionierbar sind. Dadurch ist eine kostengünstige Herstellung und Montage gegeben. Bei der Herstellung der Verstelleinrichtung aus Kunststoff werden das Gehäuse 12 und das Stellelement 17 optimiert, um diese Teile durch ein Kunststoffspritzverfahren herzustellen. Sofern die Verstelleinrichtung 11 aus einem metallischen oder leichtmetallischen oder nichtmetallischen Werkstoff herzustellen ist, werden die Bauteile entsprechend zur Fertigung durch eine Werkzeugmaschine, insbesondere durch einen Drehautomaten angepasst.

Es versteht sich, dass die Merkmale der einzelnen Ausführungsformen beliebig miteinander kombinierbar sind und jeweils für sich selbst wiederum eine erfindungsgemäße Ausführungsform darstellen können.

## Patentansprüche

1. Verstelleinrichtung, insbesondere für ein an einem weiteren Bauteil bewegbar angeordneten Bauteil, mit einem Gehäuse (12), welches zumindest ein Befestigungselement (14) aufweist, mit einem axial in dem Gehäuse (12) bewegbar angeordneten Stellelement (17), welches ein Kolben (21) und eine daran angeordnete Kolbenstange (22) umfasst, deren freies Ende zumindest ein Befestigungselement (23) aufweist, mit einer Kraftspeichereinrichtung (36), **dadurch gekennzeichnet, dass** zumindest eine an dem Gehäuse (12) oder dem zumindest einen Kolben (21) integrierte oder daran angeordnete Dämpfungseinrichtung (31) vorgesehen ist, welche mit der Kraftspeichereinrichtung (36) zusammenwirkt und die auf das bewegbare Stellelement (17) wirkende Verstellkraft zwischen einer Ruhestellung (43) und einer Arbeitsstellung (44) ausübt.

2. Verstelleinrichtung nach Anspruch 1, **dadurch gekennzeichnet, dass** wenigstens zwei zueinander beabstandete, an der Gehäuseinnenwand (26) gleitend angeordnete und ringförmige Führungsabschnitte (27) vorgesehen sind.

3. Verstelleinrichtung nach Anspruch 2, **dadurch gekennzeichnet, dass** die Führungsabschnitte (27) aus wenigstens zwei in geringem Abstand zueinander angeordneten, scheibenförmigen Elemente (28) ausgebildet sind, deren radialer Außenwandabschnitt mittelbar oder unmittelbar an einer Gehäuseinnenwand (26) angreift.

4. Verstelleinrichtung nach Anspruch 2 oder 3, **dadurch gekennzeichnet, dass** zwischen den Führungsabschnitten (27) zumindest eine Dämpfungseinrichtung (31) angeordnet ist, welche vorzugsweise als Reibring vorgesehen ist, der zumindest Abschnittsweise an der Gehäuseinnenwand (26) angreift.

5. Verstelleinrichtung nach einem der Ansprüche 2 oder 3, **dadurch gekennzeichnet, dass** die Führungsabschnitte (27) des Kolbens (21) in einer in dem Gehäuse (12) vorgesehenen, hülsenförmigen Dämpfungseinrichtung (31) geführt sind.

6. Verstelleinrichtung nach Anspruch 2 oder 3, **dadurch gekennzeichnet, dass** benachbart zu den Führungsabschnitten (27) zumindest eine Dämpfungseinrichtung (31) angeordnet ist.

7. Verstelleinrichtung nach einem der vorhergehenden Ansprüche, **dadurch gekennzeichnet, dass** der zumindest eine Kolben (21) des Stellelementes (17) an einem der Kolbenstange (22) entgegengesetzten Ende eine Führung (38) aufweist, die verschiebbar ausgebildet ist und vorzugsweise ein Führungselement (41) mit einem komplementär ausgebildeten Führungselement (42) in dem Gehäuse (12) aufweist.

8. Verstelleinrichtung nach einem der vorhergehenden Ansprüche, **dadurch gekennzeichnet, dass** die Kraftspeichereinrichtung (26) als elastisches Element, insbesondere aus elastischem Kunststoff oder elastischem Kunststoffschaum als Druck- oder Spiralfeder ausgebildet ist.

9. Verstelleinrichtung nach einem der vorhergehenden Ansprüche, **dadurch gekennzeichnet, dass** die Kraftspeichereinrichtung (36) aus mehreren stab- und/oder ringförmigen elastischen Kunststoffelementen ausgebildet ist.

10. Verstelleinrichtung nach einem der vorhergehenden Ansprüche, **dadurch gekennzeichnet, dass** das Gehäuse (12) und das Stellelement (17) jeweils einteilig ausgebildet sind.

11. Verstelleinrichtung nach einem der vorhergehenden Ansprüche, **dadurch gekennzeichnet, dass** das Gehäuse (12) und das Stellelement (17) aus dem selben Material hergestellt sind.

12. Verstelleinrichtung nach einem der vorhergehenden Ansprüche, **dadurch gekennzeichnet, dass** das Gehäuse (12) und das Stellelement (17) als Spritzgussteil oder als Automatendrehteil ausgebildet sind.

13. Verstelleinrichtung nach einem der vorhergehenden Ansprüche, **dadurch gekennzeichnet, dass** das Gehäuse (12) auf einer Seite der Längsachse (18) ein offenes Ende (46) aufweist.

14. Verstelleinrichtung nach einem der vorhergehenden Ansprüche, **dadurch gekennzeichnet, dass** die Kraftspeichereinrichtung (36) und die zumindest eine Dämpfungseinrichtung (31) aufeinander abgestimmt sind, so dass in einer ersten Phase der Stellbewegung eine hohe Verfahrgeschwindigkeit und in einer Endphase der Steilbewegung unmittelbar vor Erreichen einer Arbeitsstellung (44) eine zunehmende Verzögerung vorgesehen ist.

15. Verstelleinrichtung nach einem der vorhergehenden Ansprüche, **dadurch gekennzeichnet, dass** die Dämpfungseinrichtung (31) aus einem Material aus einem höheren Reibwert als das Gehäuse (12) und das Stellelement (17) ausgebildet ist und vorzugsweise aus gummielastischem Material oder thermoplastischem Kunststoff vorgesehen ist.
